# DEMANDE DE BREVET EUROPEEN

(11) **EP 1 671 757 A2**
(43) Date de publication de la demande: **21.06.2006**
(21) Numéro de dépôt: 05026938.0
(22) Date de dépôt: 09.12.2005
(51) Int. Cl.: B25J 9/16

(54) **Procéde de commande de robots installation de traitement de pièces, et application**

(30) Priorité: 10.12.2004 FR 0413454
(71) Demandeur: AFE Metal, 42110 Feurs (FR)
(72) Inventeur: Vejux, Christophe, 25000 Besancon (FR)
(74) Mandataire: Bentz, Jean-Paul

(57) **Abrégé**

L'invention concerne notamment un procédé de commande des mouvements effectués, dans un espace commun, par deux robots (1, 2) dont le premier (1) saisit une à une des pièces à traiter (5) et dont le second (2) traite chaque pièce (5) saisie par le premier robot (1)

Le procédé selon l'invention prévoit de mémoriser les mouvements effectués par les robots (1, 2) pour une pièce de référence, de déterminer et mémoriser, pour chaque pièce (5) à traiter, les écarts que présentent, dans un repère (6) lié à l'un des robots (1, 2), la position et la conformation de cette pièce, une fois saisie par le premier robot, par rapport à la position et la conformation de la pièce de référence telle qu'initialement saisie par le premier robot, et de corriger, par ces écarts, la trajectoire prise par le premier robot (1) lors du traitement de cette pièce (5).

## Description

L'invention concerne, de façon générale, les techniques d'automatisation de processus industriels.

Plus précisément, l'invention concerne, selon un premier de ses aspects, un procédé de commande des mouvements coordonnés de deux robots dont le premier, en fonctionnement, saisit une à une des pièces à traiter de type prédéterminé et dont le second, en fonctionnement, traite chaque pièce saisie par le premier robot.

Dans la mesure où ils reposent sur l'utilisation de données préalablement mémorisées, les processus automatisés, et notamment le pilotage de robots, requièrent généralement que les opérations élémentaires qui doivent être effectuées dans le cadre de ces processus soient totalement reproductibles.

Il existe néanmoins des situations dans lesquelles cette condition n'est pas remplie.

Par exemple, lorsque des pièces saisies aléatoirement par un premier robot doivent être traitées par un second robot, la façon dont chaque pièce à traiter est saisie par le premier robot introduit dans le traitement de chaque pièce des conditions nouvelles qui rendent ce traitement unique et non reproductible.

Ce défaut de reproductibilité est encore plus prononcé lorsque les différentes pièces à traiter sont déformables ou déformées, et donc non strictement identiques entre elles.

Tel est par exemple le cas lorsque chacune des pièces à traiter est obtenue par moulage et constituée par une grappe d'éléments reliés entre eux par des canaux ou résidus de moulage, le traitement pouvant alors consister à séparer les différents éléments les uns des autres et des résidus de moulage.

Dans ce contexte, l'invention a précisément pour but de proposer un procédé de traitement automatisé impliquant deux robots et capable de s'affranchir des aléas que représentent, pour le traitement de chaque pièce, la façon dont le premier robot saisit cette pièce et / ou les déformations que présente cette pièce par rapport à son modèle théorique.

A cette fin, le procédé de l'invention, par ailleurs conforme à la définition générique qu'en donne le préambule ci-dessus, est essentiellement caractérisé en ce qu'il comprend au moins une opération préliminaire de calibrage consistant à déterminer et à mémoriser les mouvements coordonnés que doivent respectivement effectuer les premier et second robots dans un espace commun pour qu'une pièce de référence du type prédéterminé, saisie par le premier robot dans une position a priori quelconque et a posteriori prise pour référence, puisse être traitée par le second robot, la pièce de référence étant, dans sa position de référence, assimilée à un premier nuage de points repérés dans un repère lié à l'un des deux robots, une opération de saisie par le premier robot d'une pièce à traiter, une opération de repérage consistant, pour chaque pièce à traiter saisie par le premier robot, à déterminer les positions prises dans le repère par des points formant un second nuage de points auquel la pièce saisie est assimilable, une opération de repositionnement consistant à calculer, pour chaque pièce saisie par le premier robot, les écarts entre les positions des points des premier et second nuages de points, une opération de pilotage direct consistant, pour chaque pièce saisie, à imprimer à l'un des deux robots les mouvements préalablement mémorisés pour ce robot dans le contexte du traitement de la pièce de référence, et une opération de pilotage corrigé, concomitante à l'opération de pilotage direct et consistant, pour chaque pièce saisie, à imprimer à l'autre robot des mouvements dépendant desdits écarts et des mouvements préalablement mémorisés pour cet autre robot dans le contexte du traitement de la pièce de référence.

De préférence, le repère est lié au premier robot et l'opération de pilotage direct est appliquée au second robot.

Chaque pièce à traiter du type déterminé est par exemple réalisée par moulage et constituée par un ensemble, encore appelé "grappe", d'éléments distincts.

Le procédé de l'invention est alors notamment utilisable dans le cas où le traitement effectué par le second robot sur chaque pièce consiste à séparer les uns des autres les éléments de la grappe constituée par cette pièce.

L'invention concerne également une installation de traitement de pièces, comprenant au moins un premier robot, un second robot, et un ordinateur pilotant au moins les premier et second robots, l'ordinateur étant programmé pour mettre en oeuvre le procédé tel que précédemment défini.

Cette installation peut en outre avantageusement comprendre un dispositif de numérisation optique relié à l'ordinateur et piloté par ce dernier pour permettre au moins la capture du second nuage de points pour chaque pièce à traiter.

Cette installation peut aussi comprendre un lecteur optique, tel qu'un lecteur de code barre, relié à l'ordinateur et piloté par ce dernier pour permettre au moins la capture d'un code porté par chaque pièce à traiter et identifiant le type de cette pièce.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma représentant l'opération préliminaire de calibrage, à l'issue de laquelle les mouvements coordonnés que les robots doivent effectuer dans leur espace commun de travail pour traiter la pièce de référence sont déterminés et mémorisés;
- la figure 2 est un schéma représentant une installation conforme à l'invention pendant le traitement d'une pièce en grappe; et

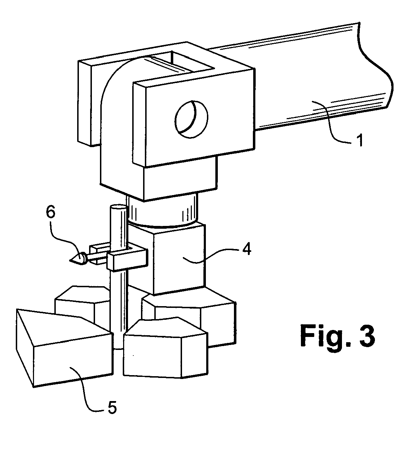

- la figure 3 est une vue agrandie d'un détail du premier robot tel qu'illustré à la figure 1, représenté pendant le traitement d'une pièce en grappe.

Comme annoncé précédemment, l'invention est avantageusement applicable au traitement automatisé de pièces en grappes.

On appelle "grappe" une pièce qui est réalisée par moulage et qui est constituée d'un ensemble d'éléments reliés entre eux par des canaux, ou plus généralement des résidus de moulage.

En raison notamment de leur géométrie et des manipulations successives que ces pièces peuvent subir, les canaux qui relient les uns aux autres leurs éléments ou parties sont déformés de manière aléatoire.

Ainsi, la position qu'occupe, dans une pièce en grappe, chaque élément de cette pièce par rapport aux autres n'est jamais identique à la position qu'il occupe dans une autre pièce en grappe de même type, prise comme référence. De plus, ces déformations sont tridimensionnelles.

Néanmoins, l'invention n'est pas limitée au traitement des pièces en grappes et s'applique plus généralement, de la même façon, à toute pièce ayant des zones aléatoirement déformées et / ou non susceptible d'être saisie automatiquement dans une position strictement reproductible.

L'invention consiste pour l'essentiel à proposer une procédure permettant de mesurer et de prendre en compte ces déformations ou ces variations d'orientation afin de pouvoir effectuer sur les pièces, de façon automatique, le ou les traitements appropriés aux endroits voulus, par exemple afin de séparer les uns des autres, par découpe, les différents éléments de cette pièce dans le cas d'une pièce en grappe.

De plus, l'invention permet d'effectuer ces opérations sur des séries d'importance quelconque, voire sur des pièces unitaires répétitives, et pour un nombre virtuellement illimité de types de pièces.

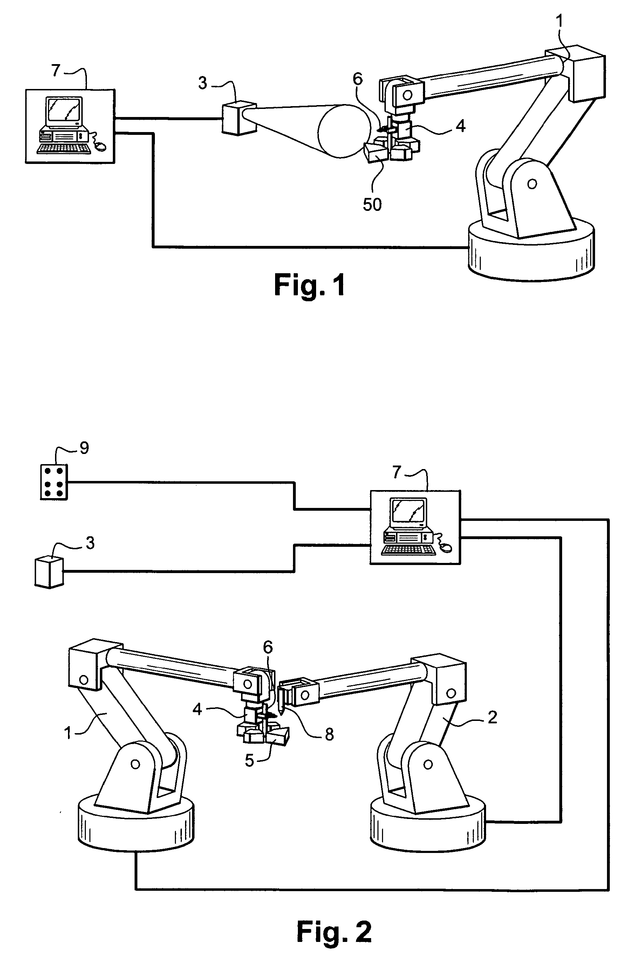

L'installation de l'invention comprend typiquement (figure 2) un premier robot 1 qui manipule une à une les pièces à traiter 5, en l'occurrence des pièces en grappes dans l'exemple illustré, un deuxième robot 2, un dispositif de numérisation optique tridimensionnelle 3, un ordinateur 7, et éventuellement un lecteur optique 9.

Le premier robot 1 est équipé d'une pince 4 de préhension des pièces 5 à traiter, tandis que le second robot 2 est équipé d'un outil 8, par exemple un outil de découpe tel qu'un chalumeau ou une torche au plasma, ou tout autre outil selon le matériau constitutif de la pièce 5 et la nature du traitement à effectuer.

Dans une phase préliminaire du procédé (figure 1), le robot 1 saisit une pièce 50 représentant génériquement les pièces 5 du même type qui seront à traiter ultérieurement, la saisie étant suffisamment ferme pour éviter tout mouvement relatif des pièces 50 ou 5 et de la pince de préhension 4 tout au long des opérations.

La position dans la pince de la pièce 50 ou de chaque pièce 5 n'a pas besoin d'être précise ni répétitive pour un type de pièce donné.

En effet, il ne servirait à rien d'imposer une telle précision et une telle répétitivité dans la mesure où les pièces, par exemple constituées de grappes, sont déformées, et où les positions exactes de ces pièces sont de toute manière inconnues.

Avant la prise, chacune des pièces telles que 50 ou 5 est donc présentée au robot 1 de manière approximative, et par exemple simplement posée par un opérateur sur un convoyeur, une table tournante, etc. sans avoir besoin de positionnement précis.

Le type de la pièce est par exemple communiqué automatiquement à l'ordinateur 7 par le lecteur optique 9 qui est relié à cet ordinateur et auquel est présenté un code barre porté par la pièce 50 ou chaque pièce 5 ou par un emballage de plusieurs pièces du même type.

La pièce saisie par le robot 1 est présentée par ce dernier devant le dispositif 3 de numérisation optique sans contact, ce dispositif étant par exemple du type à frange de lumière ou à balayage laser, et étant associé à un logiciel d'acquisition et d'enregistrement de nuages de points au format tridimensionnel.

Dans le champ de vision de ce dispositif 3 doivent être présentés non seulement la pièce 50 et ultérieurement chaque pièce 5, mais également des éléments structurels dont la position est connue avec précision par le robot 1.

Dans la mesure où ces éléments structurels doivent permettre de construire un repère 6 lié au robot 1 et défini par rapport au dispositif 3 de numérisation optique, il est possible d'utiliser des éléments fixes sur ce robot, par exemple les faces indéformables du corps de la pince de préhension 4.

En toute hypothèse, il est très avantageux de caler le repère 6 sur un élément structurel dont la position est connue dans le référentiel spatial de l'un ou de l'autre des robots 1 et 2, qui est fixe par rapport à chaque pièce 50 ou 5 une fois saisie, et qui est aussi proche que possible de cette pièce.

Le dispositif 3 de numérisation optique, piloté par l'ordinateur 7, détermine alors les positions tridimensionnelles d'une multitude de points appartenant aux surfaces présentées dans son champ de vision.

Ce dispositif, connu en lui-même, remplit ainsi une fonction assimilable à une palpation sans contact, les coordonnées dans l'espace des points rencontrés étant obtenues par mesure des paramètres du faisceau lumineux émis par ce dispositif, et du faisceau lumineux réfléchi qu'il reçoit en retour.

Par cette opération, qui permet l'obtention de plusieurs dizaines de milliers de mesures en quelques secondes, un fichier comprenant les valeurs des coordonnées tridimensionnelles de chacun des points observés est créé et mémorisé dans l'ordinateur 7.

Cependant, comme l'invention prévoit que le dispositif 3 de numérisation optique prenne dans son champ de mesure à la fois la pièce 50, ou chaque pièce 5, et par exemple les points d'une face indéformable du corps de la pince 4 définissant le repère 6, le logiciel associé à ce dispositif 3 peut exprimer les coordonnées des points relevés sur la pièce 50, et ultérieurement sur chaque pièce 5, dans le repère choisi 6, ces points formant, pour la pièce 50, un premier nuage de points.

Ainsi, quelle que soit l'imprécision de la position du premier robot 1, et quelle que soit la position du dispositif 3 de numérisation, toutes les coordonnées relevées sont exprimées dans le même repère 6.

Dans le cas où le corps de la pince 4 de préhension sert à construire le repère 6, ce repère est défini comme le repère outil du robot.

Le fichier contenant le nuage de points qui délimite la pièce 50 prise comme référence et son repère 6 doit, après sa création, être mémorisé dans un fichier de référence, ce fichier permettant ultérieurement de connaître les écarts de position et de conformation que présente chacune des pièces à traiter 5 par rapport à la pièce de référence 50.

Ce premier nuage de points peut être obtenu comme exposé ci-dessus par utilisation du dispositif 3 de numérisation optique, ou par la transformation en format "nuage de points" du fichier CAO (conception assistée par ordinateur) de la pièce 5, étant entendu que la position de cette pièce 5 dans la pince de préhension est quelconque et non reproductible.

Les trajectoires du robot 1, définies pour le traitement de la pièce de référence 50, sont exprimées dans le repère défini 6, en prenant ce repère pour origine, c'est-à-dire en fixant à zéro toutes les composantes de ce repère.

Ces trajectoires sont définies par apprentissage dans le cas où l'opération préliminaire de calibrage est effectuée avec une pièce de référence réelle 50, ou hors ligne dans le cas où elle est effectuée avec une pièce de référence issue d'un fichier CAO.

Pour chacune des pièces 5 ultérieurement manipulée par le robot 1, les calculs qui permettent, par comparaison du premier nuage de points obtenu pour la pièce de référence 50 et du second nuage de points obtenu pour chaque pièce à traiter 5, de déterminer les écarts de position et de conformation de cette pièce 5 par rapport à la pièce de référence 50, sont exécutés automatiquement après acquisition du nuage de points relatif à cette pièce 5.

Dans le cas où les pièces 5 à traiter présentent des parties ou éléments distincts, par exemple dans le cas où elles sont constituées par des grappes, le logiciel du dispositif 3 de numérisation isole chaque élément de chaque pièce 5 à traiter et calcule ensuite les écarts de position et de conformation existant entre cet élément de cette pièce, et l'élément correspondant de la pièce de référence par comparaison du second nuage de points et du premier nuage de points contenu dans le fichier de référence mémorisé.

Ces écarts, qui sont exprimés selon 6 composantes, à savoir 3 translations et 3 rotations selon les 3 axes du repère défini, intègrent donc non seulement les différences de positions respectivement adoptées par la pièce 5 à traiter et par la pièce de référence 50 lors de leur préhension, mais également toutes les déformations que présente la pièce 5 à traiter par rapport à la pièce 50 de référence.

Ces écarts sont fournis au robot 1. Les composantes du repère 6 dans lequel ont été apprises les trajectoires du robot 1 étant égales à zéro, il suffit de les remplacer par les valeurs des écarts. La trajectoire suivie par le robot 1 pour le traitement de chaque pièce 5 est ainsi obtenue en décalant, de la valeur des écarts déterminés pour cette pièce 5, la trajectoire mémorisée qu'a suivie le robot 1 pour le traitement de la pièce de référence 50.

De façon similaire, la trajectoire du robot 2 est déterminée et mémorisée, par apprentissage ou hors ligne, de manière à assurer le traitement de la pièce de référence 50 dans la ou les positions dans laquelle ou dans lesquelles le robot 1 présente cette pièce 50 au robot 2 pour son traitement.

Cependant, quand le robot 1 manipule ultérieurement les pièces 5 à traiter, les transformations qui sont appliquées à son repère 6 et qui ont été décrites précédemment ont pour effet que ces pièces 5 sont toujours présentées au robot 2 dans la même ou les mêmes positions que la pièce de référence 50.

Ainsi, contrairement au robot 1, le robot 2 n'a besoin d'aucune correction de sa trajectoire et effectue donc toujours, pour un même type de pièces, les mêmes déplacements dans l'espace.

Comme le comprendra aisément l'homme du métier à la lecture de la présente description, les écarts calculés pour chaque pièce 5 à traiter pourraient être utilisés pour corriger la trajectoire mémorisée du robot 2 au lieu d'être utilisés pour corriger la trajectoire mémorisée du robot 1, cette variante conduisant cependant à un traitement informatique plus complexe et requérant la connaissance précise des positions relatives des deux robots.

En résumé, l'invention permet de prendre des pièces à traiter de manière quelconque à l'aide d'un robot.

Dans le cas de pièces en grappes, les positions des éléments de la pièce peuvent varier aléatoirement dans les trois dimensions.

L'invention est notamment utilisable, de la même façon, pour le traitement de toutes pièces présentant des zones ayant subi des déformations aléatoires.

L'invention permet de repositionner successivement dans l'espace chacune des pièces (ou zones de pièce) dans une position déterminée sans aucun outillage de positionnement.

A cette position déterminée, la pièce peut subir avec précision tout type de traitement approprié.

Toutes les opérations sont automatisées : aucune intervention humaine n'est nécessaire dés lors que le type de pièce à traiter a préalablement été identifié, par la lecture d'un code barre, par exemple.

Aucun outillage de mise en position n'étant nécessaire, il n'y a pas de limite quant au nombre maximal ou à la taille minimale des séries de pièces arrivant dans l'installation.

Des pièces successives de différents types peuvent être traitées par l'installation : il suffit de les identifier à l'entrée, par la lecture d'un code barre par exemple, l'ordinateur et les robots utilisant alors cette indication pour sélectionner les fichiers mémorisés correspondants au type de pièce à traiter.

Bien entendu, le traitement effectué sur les pièces peut être de toute nature et inclut notamment le découpage, l'ébavurage, l'usinage, le collage, l'assemblage, la gravure, le positionnement, etc.

Les organigrammes ci-après rappellent les opérations essentielles de l'invention, le premier organigramme rappelant les opérations effectuées avec la pièce de référence 50 et conduisant à la création du fichier de référence, et le second organigramme rappelant les opérations effectuées avec chacune des pièces 5 à traiter.

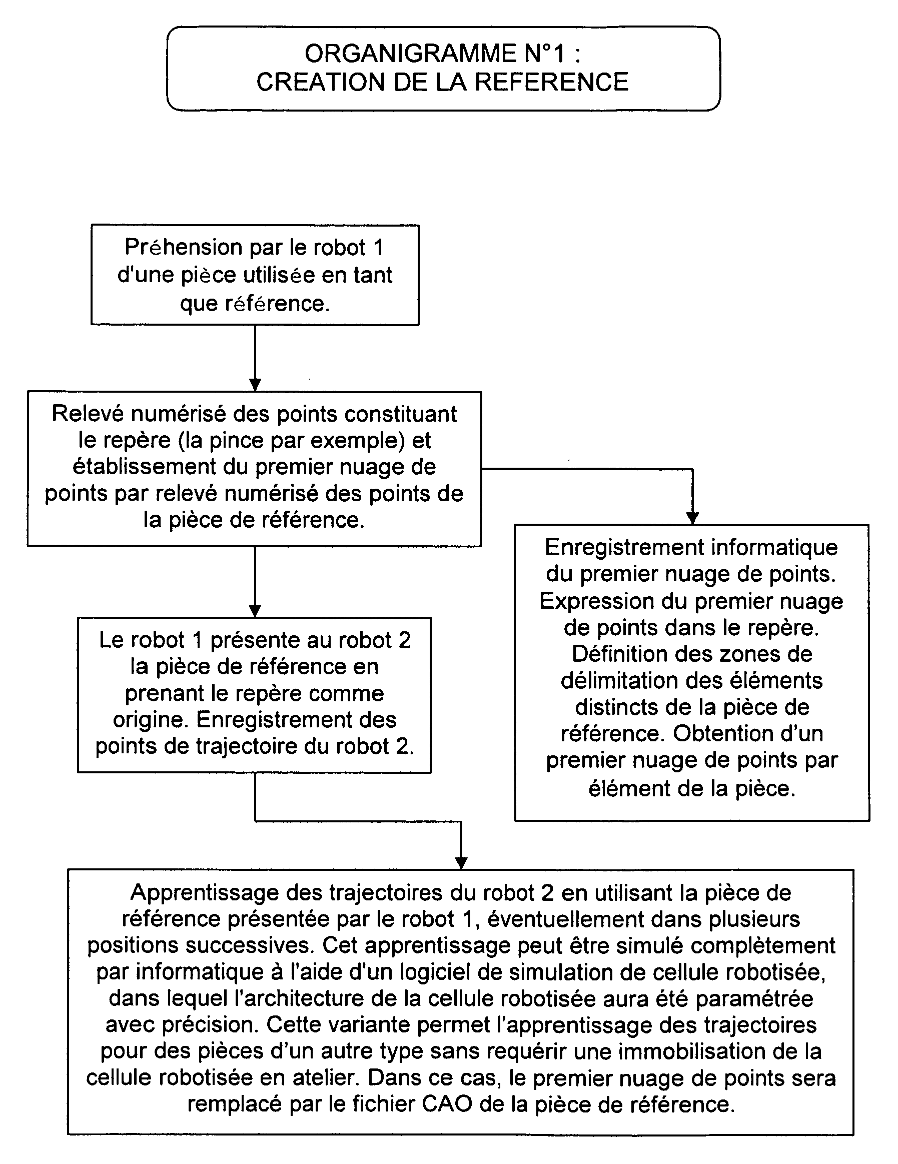

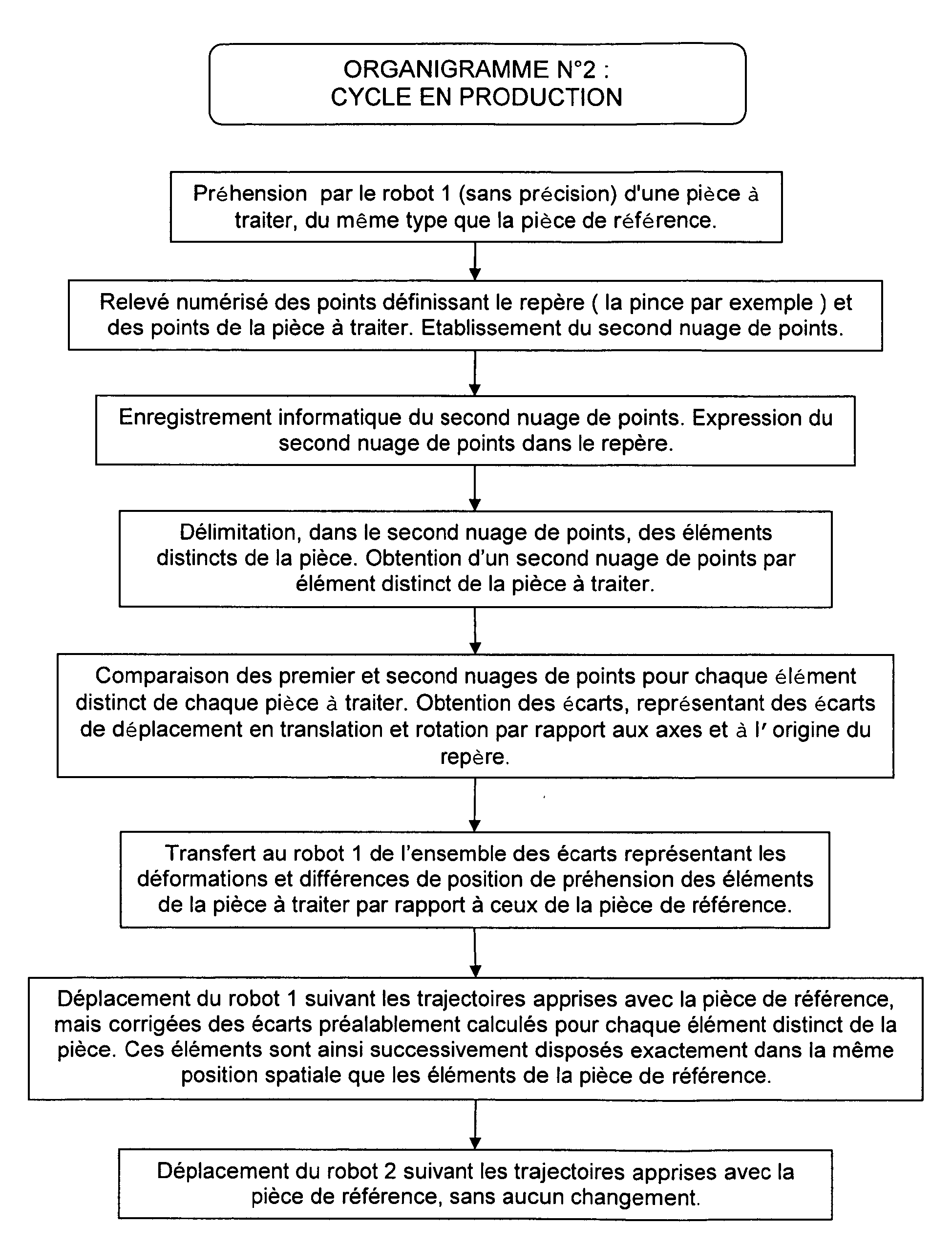

## Revendications

1. Procédé de commande des mouvements coordonnés de deux robots (1, 2) dont le premier (1), en fonctionnement, saisit une à une des pièces à traiter (5) de type prédéterminé et dont le second (2), en fonctionnement, traite chaque pièce (5) saisie par le premier robot (1), **caractérisé en ce qu'**il comprend au moins une opération préliminaire de calibrage consistant à déterminer et à mémoriser les mouvements coordonnés que doivent respectivement effectuer les premier et second robots (1, 2) dans un espace commun pour qu'une pièce de référence (50) du type prédéterminé, saisie par le premier robot (1) dans une position a priori quelconque et a posteriori prise pour référence, puisse être traitée par le second robot (2), la pièce de référence (50) étant, dans sa position de référence, assimilée à un premier nuage de points repérés dans un repère (6) lié à l'un des deux robots, une opération de saisie par le premier robot (1) d'une pièce à traiter (5), une opération de repérage consistant, pour chaque pièce à traiter (5) saisie par le premier robot (1), à déterminer les positions prises dans le repère (6) par des points formant un second nuage de points auquel la pièce saisie (5) est assimilable, une opération de repositionnement consistant à calculer, pour chaque pièce (5) saisie par le premier robot (1), les écarts entre les positions des points des premier et second nuages de points, une opération de pilotage direct consistant, pour chaque pièce saisie (5), à imprimer à l'un des deux robots (1, 2) les mouvements préalablement mémorisés pour ce robot dans le contexte du traitement de la pièce de référence (50), et une opération de pilotage corrigé, concomitante à l'opération de pilotage direct et consistant, pour chaque pièce saisie (5), à imprimer à l'autre robot (2, 1) des mouvements dépendant desdits écarts et des mouvements préalablement mémorisés pour cet autre robot dans le contexte du traitement de la pièce de référence (50).

2. Procédé de commande suivant la revendication 1, **caractérisé en ce que** le repère (6) est lié au premier robot (1) et **en ce que** l'opération de pilotage direct est appliquée au second robot (2).

3. Procédé de commande suivant la revendication 1 ou 2, **caractérisé en ce que** chaque pièce à traiter (5) du type déterminé est réalisée par moulage et constituée par un ensemble, encore appelé "grappe", d'éléments distincts.

4. Procédé de commande suivant la revendication 3, **caractérisé en ce que** le traitement effectué par le second robot (2) sur chaque pièce (5) consiste à séparer les uns des autres les éléments de la grappe constituée par cette pièce.

5. Installation de traitement de pièces, comprenant au moins un premier robot (1), un second robot (2), et un ordinateur (7) pilotant au moins les premier et second robots (1, 2), l'ordinateur (7) étant programmé pour mettre en oeuvre le procédé suivant l'une quelconque des revendications précédentes.

6. Installation suivant la revendication 5, **caractérisé en ce qu'**il comprend en outre un dispositif de numérisation optique (3) relié à l'ordinateur (7) et piloté par ce dernier pour permettre au moins la capture du second nuage de points pour chaque pièce à traiter (5).

7. Installation suivant la revendication 5 ou 6, **caractérisé en ce qu'**il comprend en outre un lecteur optique (9), tel qu'un lecteur de code barre, relié à l'ordinateur (7) et piloté par ce dernier pour permettre au moins la capture d'un code porté par chaque pièce à traiter (5) et identifiant le type de cette pièce.

8. Application de l'installation suivant l'une quelconque des revendications 5 à 7 au traitement de pièces en grappes.
